(19) Europäisches Patentamt
European Patent Office
Office européen des brevets

(11) Publication number: **0 431 949 A2**

(12) **EUROPEAN PATENT APPLICATION**

(21) Application number: **90313284.3**

(51) Int. Cl.⁵: **G06F 13/12**

(22) Date of filing: **06.12.90**

(30) Priority: **08.12.89 JP 317910/89**

(43) Date of publication of application:
**12.06.91 Bulletin 91/24**

(84) Designated Contracting States:
**DE FR GB**

(71) Applicant: **International Business Machines Corporation**
**Old Orchard Road**
**Armonk, N.Y. 10504(US)**

(72) Inventor: **Kawashima, Kenichi**
**5-3-8 Kugayama**
**Suginami-ku, Tokyo to(JP)**

(74) Representative: **Harris, Ian Richard**
**IBM United Kingdom Limited Intellectual Property Department Hursley Park**
**Winchester, Hants. SO21 2JN(GB)**

(54) **Data processing system with channel control means.**

(57) A data processing system comprises a host unit 1 generating a command and address, a local channel control means 2 connected to the host unit for receiving the command and the address, to generate an initial status depending upon the command and the address and to send the initial status to the host unit, a remote channel control means 3 connected to the local channel control means for receiving the command and the address, and a control unit 4, 5 connected to the remote channel control means for receiving the command and the address to control an I/O device 12, 13, the host unit responding the initial status to control a connection and a disconnection of the local channel control means. The control units can thus be located at the remote location, and the host unit is effectively connected or disconnected to the local channel control device 2 during the execution of the command depending upon the command and the address, whereby the host unit can perform other jobs during the disconnected period.

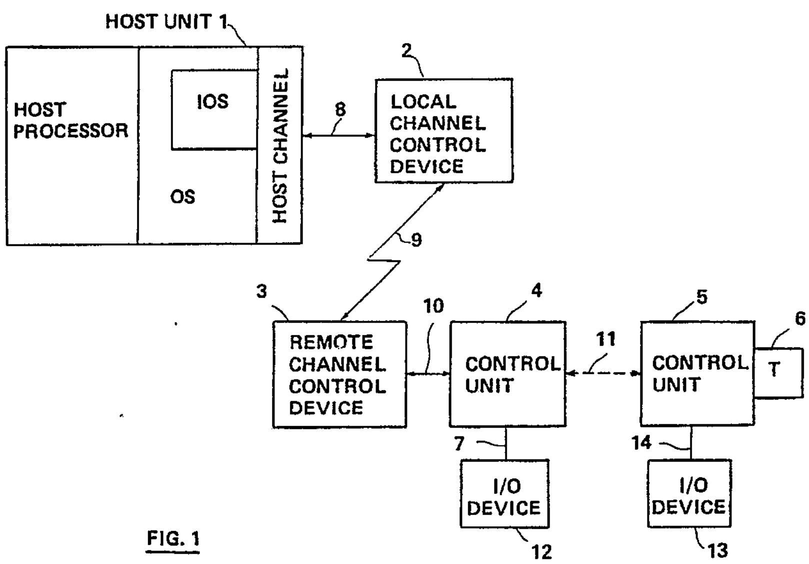


FIG. 1



Xerox Copy Centre

# DATA PROCESSING SYSTEM WITH CHANNEL CONTROL MEANS

The invention relates to a data processing system, particularly to a situation where a host unit is effectively connected or disconnected during the execution of a command depending upon the command and address.

In order to illustrate the prior art, reference is made to Figs. 10, 11 and 12. The Fig. 10 shows a standard connection between a host unit 31 and plural input/output (I/O) devices 41, 43 and 45. Plural control units 33, 35 and 37 are serially connected to the host unit 31, and a terminator (T) 39 is connected to the control unit 37. The I/O device is connected to each control unit. Lines 32, 34, 36 and 38 are parallel data busses. The host unit 31 includes a host processor, an operating system and a host channel. The host channel decodes a channel command word (CCW) from the host processor to supply a command and I/O device address to the control units connected in series. The control unit decodes the command to control the addressed I/O device. These operations have been called as the channel operation, and well known in the art.

One of conditions required for the channel operation is that a response period in an initial sequence, from the time at which the host unit sends the command and the I/O device address to the time at which the control unit returns the response must be shorter than a predetermined time period, such as 32 micro seconds. If none of the control units is assigned with the I/O device address sent from the host channel, the command and the I/O device address are sent to the terminator (T) 39 and returned to the host channel. This longest time period must be shorter than 32 micro seconds. If the response time is longer than 32 micro seconds, the initial selection sequence is deemed as an error, and the channel operation can not be proceeded. Therefore, the total length of the lines 32, 34, 36 and 38 has been selected to satisfy the above condition. One example of the length is about 400 feet. However, it has been required to locate the control unit at a remote location over the 400 feet length.

To solve the problem, the systems shown in the Figs. 11 and 12 have been proposed. In the Fig. 11, the host unit 46 and a channel to channel adapter 47 are located at a local location, and the channel to channel adapter 49, the host unit 50, the control unit 51 and the I/O device 52 are located at a remote location, and a long transmission line 48 connects them. This approach successfully enables the control unit 51 to be located at the remote location, but it requires the additional host unit 50 and an operator for operating it. This system is fully operable but it has the disadvantage of the cost of the additional host unit 50 and the operator.

The Fig. 12 shows a system disclosed in Japanese patent 1411818 wherein a channel adapter 55 and I/O adapter 57 are connected between the host unit 53 and the I/O device 59, lines 54 and 58 are parallel data transmission lines, line 56 is serial data transmission line. The channel adapter 55 and the I/O adapter 57 operate as buffers between the host unit 53 and the I/O device 59. In the patent, the connection between the host unit 53 and the channel adapter 55 is maintained during the process of the command, so that other jobs of the host unit must wait for the completion of the process of the command.

The object of the present invention is to provide a data processing system mitigating the problems of the prior art.

In accordance with the invention, there is provided, a data processing system comprising:

a host unit generating a command and address:

a local channel control means connected to the host unit for receiving the command and the address, to generate an initial status depending upon the command and the address and to send the initial status to the host unit;

a remote channel control means connected to the local channel control means for receiving the command and the address; and

a control unit connected to the remote channel control means for receiving the command and the address to control an I/O device; wherein

the host unit responds the initial status to control a connection and a disconnection of the local channel control means.

In a data processing system in accordance with the present invention, the control units can thus be located at the remote location, and the host unit is effectively connected or disconnected to the local channel control device 2 during the execution of the command depending upon the command and the address, whereby the host unit can perform other jobs during the disconnected period.

The local channel control means preferably discriminates a type of operation for processing the command, in accordance with the command and the address and sends a type information representing the type of operation to the remote channel control means, and the remote channel control means responds the type information to control I/O device.

Preferably, the local channel control means includes an initial status table storing initial statuses which are accessed by the command and the address, and a type information table storing type information which are accessed by the command and the address.

The control unit is preferably a control unit without data buffer memory or a control unit with data buffer memory.

Preferably, the host unit and the local channel control means are connected by parallel data transmission line, the local channel control means and the remote channel control means are connected by serial data transmission line, and the remote channel control means and the control unit are connected by parallel data transmission line.

An example of the invention is described hereinafter with reference to the accompanying drawings, in which:

Fig. 1 shows a block diagram of an example of a data processing system in accordance with the present invention.

Fig. 2 shows the transmission formats used in the example of a present invention.

Fig. 3 shows the local channel control device and the remote channel control device.

Fig. 4A and 4B show the initial status table and the type information table in the local channel control device, respectively.

Figs. 5, 6, 7, 8 and 9 show the operations performed in the example of a data processing system in accordance with the present invention.

Figs. 10, 11 and 12 show the configurations of the prior data processing systems.

Fig. 1 shows an example of a data processing system in accordance with the present invention. The system includes a host unit 1, a local channel control device 2, a remote channel control device 3, control units 4 and 5 and I/O devices 12 and 13. The control unit 4 is provided with a data buffer memory, but the control unit 5 is not provided with the data buffer memory. Although plural control units are serially connected to the remote channel control device 3, only control units 4 and 5 are shown in the Fig. 1. The host unit 1 includes a host processor, an operating system (OS) which includes IO Supervisor (IOS), and a host channel. The OS and IOS decodes channel control word (CCW) including command and address or data from the host processor to control the host channel, in well known manner in the art. Line 8 is a parallel data transmission line including plural tag lines and two 9 bit buses, and the command, address, data and status information are transmitted in parallel between the host unit 1 and the local channel control device 2. Line 9 is a well known serial data transmission line, such as RS449, V35, X21, HSDS, etc. Lines 10 and 11 are the same as the line 8, and, the command, the address, the data and the status information are transmitted in parallel between the remote channel control device 3 and the control unit 4. I/O devices 12 and 13 are connected to the control units 4 and 5 through lines 7 and 14, respectively. Examples of the tag lines in the lines 8, 10 and 11 are Service In, Service Out, Data In, Data Out, Command Out, Suppress Out, etc. Since these tag lines have been well known in the art, details of the tag lines are not described.

Fig. 2 shows formats used in the serial transmission line 9 between the local channel control device 2 and the remote channel control device 3. Format A is used to perform the transmission of the data or the status information. A portion 21 of the format A includes flags (F), address (A) of the local or remote channel control device 2 or 3 and control data (c). A portion 22 is used to transmit format B or format C. A portion 23 includes frame check sequence (FCS) and flags (F). 16 byte format B is used to transmit latter described various messages between the local channel control device 2 and the remote channel control device 3. Header portion 25 includes the address of the control unit, length of the format B, information indicating data chaining, etc. Two byte portion 26 is used for message code. One byte portion 27 is used for the address. Two byte portion 29 is used for type information, Type 1, Type 2 or Type 3, as described hereinafter. Format C is used for transmitting data between the local channel control device 2 and the remote channel control device 3. The 16 bytes are followed by the data. Therefore, the format C includes the 16 bytes and the data.

The local channel control device 2 sends an initial status to the host channel depending upon the received command and address, to the host channel. To this end, the local channel control device 2 includes an initial status table 21 accessed by the command and the address. The host channel responds the initial status to control the connection and the disconnection of the local channel control device 2.

The address used in the specification means the address of the control unit when only one I/O device is connected to the control unit, or the addresses of both the control unit and I/O device when plural I/O devices are connected to the control unit.

Processing patterns or types of operations are selected depending upon as to whether the addressed control unit is provided with a data buffer memory, or not. As stated before, the control unit 4 is provided with a data buffer memory, whereas the control unit 5 is not provided with a data buffer memory. The control unit 4 can store the data in its own data buffer memory. Accordingly, the control unit 4, in the READ operation, can store the data sent from the I/O device; and when a re-transmission of the data due to a transmission error, for example, is requested, the data is re-transmitted from the data buffer memory of the control unit 4 to the remote channel control device 3 without re-operating the I/O device. The control unit 4, in the WRITE operation, can store the data sent from the remote channel control device 3; and when a re-transmission of data due to a printer error, for example, is requested, the data is resent from the data buffer memory of the control unit 4 to the printer without re-transmitting the data from the remote channel control device 3. Thus, the control unit 4 can recover the error without requesting the re-transmission of the data from the data source.

The control unit 5 cannot store the data and only passes the data. Accordingly, the control unit 5, in the READ operation, passes the data sent from the I/O device, such as a tape unit to the remote channel control device 3. When the re-transmission of the data is required due to the error, the tape unit must be connected again and the data is re-transmitted from the tape unit to the remote channel control device 3 through the control unit 5. The control unit 5, in the WRITE operation, also passes the data sent from the remote channel control device 3 to the printer, for example. When the re-transmission of the data is required, the data must be re-sent from the remote channel control device 3 to the printer through the control unit 5. Thus, control unit 5 requires the re-connection of the data source to recover the error.

The types of operations for processing the commands are classified into the following three type operations:

TYPE 1 Operation

The type 1 operation processes READ or WRITE command to the control unit 5 without the data buffer memory. The type 1 operation processes the command which requires the data transfer sequence, requires X'00' as an initial status, requires X'08' as an ending status and requires X'04' as an asynchronous status.

The statuses used in the embodiment are, as follows. X'00' --- Command normally accepted
X'04' --- Device end
X'08' --- Channel end
X'0C' --- Channel end and Device end
X'4A' --- Command retry

The X'00' represents that the command is accepted. When the host channel, the local and remote channel control devices receive the X'00", they can proceed to the next operation.

The X'08' (Channel end) represents that the operations of the command on the channel have been completed without error, e.g. error of the number of data, parity error, etc. The X'08' is sent at the receive of the X'00' from the control unit, based upon the assumption that the data transfer will be completed without the error.

The X'04' (Device end) represents that the control unit or the I/O device has received the data, and the host channel can erase the data and process the next command.

The X'4A' makes the host channel to perform the command retry when the host channel receives the X'04' from the local channel control device 2.

TYPE 2 Operation

The type 2 operation is used for processing the READ or WRITE command to the control unit 4 with the data buffer memory. The commands require the data transfer sequence, require the X'00' as the initial status, and require the X'0C' as the ending status.

TYPE 3 Operation

In this operation, the data transfer sequence is not performed. The TYPE 3 operation processes the CONTROL command, which requires the X'08' as the initial status, and requires the X'04' as the asynchronous status. The type 3 operation processes the CONTROL command, such as SPACE, STOP, REWIND which changes a condition of the I/O device.

Fig. 3 shows the details of the local channel control device 2 and the remote channel control device 3. The local channel control device 2 includes a microprocessor (MPU) 20, an initial status table 21, a type information table 22 and a data buffer memory 23. The MPU 20 controls the operations and the data buffer memory 23 stores the data. The remote channel control device 3 includes MPU 27 which controls the operations of the device 3 and a data buffer memory 28 which stores the data.

The MPU 20 in the local channel control device 2 receives the command and the address; sends a message, which represents the command, the address and the type information, to the remote channel control device 3; sends the status to the host channel; and controls the transmission of data.

The MPU 27 in the remote channel control device 3 responds the message from the local channel control device 2 to control the control unit 4 or 5 and the transmission of data.

Fig. 4A shows the initial status table 21 which stores various initial statuses, one of which is fed back to the host channel in accordance with the command and the address of the control unit when these are supplied from the host channel to the local channel control device 2. One of the statuses is accessed by the command and the address. In other words, one of the initial statuses is selected depending upon the command and the address of the control unit.

Fig. 4B shows the type information table 22 which stores the type information, i.e. Type 1, Type 2 and Type 3, one of which is selected depending upon the command and the address of the control unit supplied from the host channel to the local channel control device 2.

The local channel control device 2, therefore, decodes the command and the address supplied from the host channel to send back the initial status to the host channel depending upon the received command and the address, and to send both the command and address along with the type information, i.e. Type 1, Type 2 or Type 3, which is selected depending upon the command and the address, to the remote channel control device 3.

Figs. 5, 6, 7, 8 and 9 show various operations between the host channel and the local channel control device 2, between the local channel control device 2 and the remote channel control device 3, and between the remote channel control device 3 and the control unit.

Operational sequences between the host channel and the local channel control device 2 and between the remote channel control device 3 and the control unit are, as follows.

ISS --- Initial selection sequence
DTS --- Data transfer sequence
ES --- Ending status transfer sequence
CUIS --- Control unit initiated sequence

During the ISS, the command and the address are sent, and the initial status are sent back between the host channel and the local channel control device 2, and between the remote channel control device 3 and the control unit.

During the DTS, the data is sent between the host channel and the local channel control device 2 and between the remote channel control device 3 and the control unit.

During the ES, the ending status is sent between the host channel and the local channel control device 2 and between the remote channel control device 3 and the control unit.

During the CUIS, asynchronous status is sent between the host channel and the local channel control device 2 and between the remote channel control device 3 and the control unit.

Messages transmitted between the local channel control device 2 and the remote channel control device 3 are, as follows.

ISSINF --- It means Initial selection information. When the ISSINF is sent from the control device 2 to the control device 3, the command, the address and the type information are also sent from the control device 2 to the control device 3.

ISSTAT --- It means Initial status sent from the control unit. When the ISSTAT is sent, the control unit address is also sent.

DTSCMP --- It means Data transfer complete. When the control device 2 or 3 has received the data transfer, it sends this message along with the control unit address.

ESSTAT --- It means Ending status. It is used to transmit the ending status of the control unit. The control unit address is also sent.

ESCOND --- It means Ending status condition. It indicates the response of the host channel when the host channel receives the ending status.

ASCOND --- It means Asynchronous status condition. It indicates the response of the host channel when the host channel receives the asynchronous status.

ASYNDE --- It means Asynchronous device end. It is used to transmit the device end status to the local channel control device 2.

The Fig. 5 shows the TYPE 1 WRITE operation wherein the data is sent from the host unit 1 to the control unit 5 without the data buffer memory and the I/O device 13.

During the ISS, the host channel supplies the local channel control device 2 WRITE command and the control unit address X'61' of the control unit 5 without the data buffer memory. Referring to the Figs. 3 and 4A, the WRITE command and the address X'61' are supplied to the initial status table 21, so that the initial status X'00' (Command normally accepted) is selected, and the local channel control device 2 sends the host channel the selected initial status X'00', as shown in the Fig. 5. The WRITE command and the address X'61' are also supplied to the information table 22 of the local channel control device 2, as shown in the Figs. 3 and 4B, so that the type information, i.e. TYPE 1, is selected, and the local channel control device 2 sends the remote channel control device 3 the WRITE command, the address X'61' and the selected type information TYPE 1, as the ISSINF (Initial selection information). The host channel responds to the X'00' to transmit the data to the local channel control device 2 during DTS (Data transfer sequence). When the local channel control device 2 has received the data, the control device 2 sends the remote channel control device 3 the message DTSCMP (Data transfer complete), and transmits the remote channel control device 3 the data. The remote channel control device 3 sends the WRITE command and the address X'61' to the control unit 5 during the ISS, after receiving the data. The control unit 5 sends the initial status X'00' to the remote channel control device 3, which passes the X'00' along with the message ISSTAT to the local channel control device 2. The control device 2 responds the X'00' to send the ending status X'08' (Channel end) to the host channel during the ES (Ending status transfer sequence). That is, the control device 2 sends the ending status X'08' at the time the remote channel control device 3 has received the data and the control unit 5 has sent the initial status X'00' to the local channel control device 2. It is noted that the X'08' is generated at the receive of the X'00' from the control unit 5 based upon the assumption that the data transfer will be completed without the error.

The host channel sends a signal representing Accept of the X'08' on the tag line Service Out to the local channel control device 2, which sends the message ESCOND representing that the host channel accepted the X'08', to the remote channel control device 3. And, the host channel disconnects the local channel control device 2, and can perform other jobs. After sending the ISSTAT X'00', the remote channel control device 3 sends the data to the control unit 5 during the DTS. The control unit 5 sends the ending status X'08' to the remote channel control device 3 during the ES after receiving the data; and sends the asynchronous status X'04' during the CUIS after sending the data to the I/O device 13. The remote channel control device 3 stacks the X'04'. The stack means that the remote channel control device 3 does not accept the X'04' (Device end), but knows the arrival of the X'04' and can read the X'04'. The reasons for stacking the X'04' are as follows. If the remote channel control device 3 accepts the X'04', the control unit 5 understands as that the operation of the WRITE command was completed, and can not respond to RESET, CHAINNING, etc., which is latter sent from the host channel in this WRITE operation. The stack makes the control unit 5 to respond the RESET or CHAINNING latter sent from the host channel.

The remote channel control device 3 sends ASYNDE (X'04') to the local channel control device 3, which sends CUIS STAT X'04' to the host channel during the CUIS. The host channel responds the X'04' by sending the control device 2 a signal on the tag line Service Out if accepts the X'04'; or sends RESET or CHAINNING on the respective tag lines to the control device 2 if these are required. The local channel control device 2 sends the message ASCOND indicating the host channel response to the remote channel control device 3. When the host channel response is ACCEPT, the control device 3 accepts the ASYN STAT X'04' at this time, and the WRITE operation is completed. When the host channel response is RESET, the RESET is sent to the control unit 5 for performing the RESET operation.

The above operations for processing the host channel response are performed by TEST I/O (TIO) shown in the Fig. 5.

In the type 1 operation, the control unit 5 sends the status X'08' to the remote channel control device 3 when the control unit 5 has passed the data to the I/O device 13; and sends the status X'04' to the remote channel control device 3 when the I/O device 13 has processed the data.

The reasons for separately generating the statuses X'08' and X'04' are that the control unit 5 does not have the data buffer memory, and cannot generate the X'04' (Device end) until the I/O device 13 has processed the data.

It is apparent that the host channel connects the local channel control device 2 from the ISS (Initial selection sequence) to the ES (Ending status transfer sequence); disconnects the control device 2 until the CUIS (Control unit initiated sequence); and connects again the control device 2 during the CUIS, as shown in the Fig. 5. The host channel, therefore, can perform other jobs during the disconnected period.

The remote channel control device 3 is connected to the control unit 5 during the connection periods, and is disconnected from the control unit 5 during the disconnection periods shown in the Fig. 5. The control device 3 can receive the ASYN STAT from the control unit 5 in the CUIS during the disconnected period. The control device 3 can perform job of other control unit during the disconnected period.

The Fig. 6 shows the TYPE 1 READ operation wherein the data is sent from the I/O device 13 and the control unit 5 without the data buffer memory to the host unit 1.

During the ISS, the host channel sends the local channel control device 2 the READ command and the address X'61' of the control unit 5. In the same manner as stated in the TYPE 1 WRITE operation, the READ command and the address X'61' are supplied to the initial status table 21 and the information table 22 to select the initial status X'4A' and the Type information or TYPE 1, respectively. The local channel control device 2 sends the initial status X'4A' to the host channel, which responds the X'4A' to disconnect the local channel control device 2, as shown in the Fig. 6. The initial status X'4A' means the command retry which makes the host channel to perform the command retry when the host channel receives X'04' (Device end) from the local channel control device 2. The local channel control device 2 sends the READ command, the address X'61' and the type information or TYPE 1 to the remote channel control device 3 as the message ISSINF. During the ISS, the control device 3 sends the READ command and the address X'61' to the control unit 5, which sends back the initial status X'00' to the control device 3 during the ISS. The message ISSTAT X'00' is sent from the control device 3 to the control device 2. And, during DTS, the data from the I/O device is read and sent to the remote channel control device 3. When the control device 3 has received the data, it sends the message DTSCMP to the control device 2, and sends the data to the control device 2. The control unit 5 sends the ending status X'08' during the ES to the control device 3, which stacks the X'08'. That is, the control device 3 does not accept the X'08' at this time, but reads the X'08', and sends the message ESSTAT to the control device 2.

When the local channel control device 2 receives the data, it sends asynchronous status X'04' to the host channel during CUIS. It is noted that the host channel was supplied with the initial status X'4A' during the ISS, which makes the host channel to perform the command retry when it receives the X'04'. The host channel, therefore, responds the X'04' to perform the command retry, so that it sends again the READ command and the address X'61' to the local channel control device 2, and the control device 2 sends the initial status X'00' to the host channel during the ISS. The control device 2 sends the data to the host channel during the DTS and sends the ending status X'08' to the host channel. The host channel responds the X'08' to send the response, such as RESET, ACCEP, CHAINNING to the control device 2, and disconnects the control device 2. The control device 2 sends the response to the control device 3 as the message ESCOND. If the response of the host channel is ACCEPT, the control device 3 accepts the ending status X'08' which was stacked in the ES. If the response is RESET, the RESET is informed to the control unit 5 and the unit 5 resets the operation. In the exemplary case, the X'08' is accepted, and the control unit 5 sends the X'04' to the control device 3 during the CUIS. The X'04' is also stacked. The control device 3 sends ASYNDE (X'04') to the control device 2, which sends the X'04' to the host channel during CUIS. The host channel sends the response, e.g. ACCEPT, to the control device 2, which sends the ASCOND (ACCEPT) to the control device 3, so that, at this time the control device 3 accepts the X'04' which was stacked in the CUIS, and the READ operation is completed.

It is apparent that the control device 2 is connected to the host channel during the ISS, disconnected until the CUIS, connected until the ES, disconnected until the CUIS, and connected during the CUIS, whereby the host-channel can perform other jobs during the disconnected periods.

The connection between the remote channel control device 3 and the control unit 5 is connected and disconnected as shown in the Fig. 6, whereby the control device 3 can perform jobs from the other control units during the disconnected periods.

In the type 1 operation, the control unit 5 sends the status X'08' to the remote channel control device 3 when the control device 5 has passed the data from the I/O device 13 to the remote channel control device 3; and sends the status X'04' to the remote channel control device 3 when the I/O device has informed the control unit 5 of the actual end of the READ operation.

The Fig. 7 shows the TYPE 2 WRITE operation wherein the data is written from the host unit 1 to the control unit 4 with the data buffer memory and the I/O device 12. During the ISS, the host channel sends the local channel control device 2 the WRITE command and the address X'62' of the control unit 4 with the data buffer memory. In the same manner so described in the TYPE 1 operations, the WRITE command and the I/O device address X'62' are supplied to the initial status table 21 and the information table 22 to select the initial status X'00' and the type information or TYPE 2, respectively. The local channel control device 2 sends the initial status X'00' to the host channel during the ISS. The local channel control device 2 sends the WRITE command, the address X'62' and the type information or TYPE 2 as the message ISSINF to the remote channel control device 3. During the DTS, the host channel sends the data to the local channel control device 2. When the control device 2 has received the data, it sends the DTSCMP to the control device 3 and sends the data to the control device 3. The control device 3 sends the received WRITE command and the address X'62' to the control unit 4 during the ISS. Also, the control unit 4 sends the initial status X'00' to the control device 3, which sends the X'00' to the control device 2, which responds the X'00' to send the ending status X'08' to the host channel during the ES. The host channel responds the X'08' to send its response i.e. a signal on the tag line, such as ACCEPT RESET, etc. In this case, it is assumed that the host channel response is ACCEPT. The remote channel control device 3 sends the data to the control unit 4 during the DTS, after sending the status X'00' to the control device 2. When the control unit 4 has received the data, it sends the ending status X'0C' to the control device 3 during the ES. The control device 3 stacks the X'0C', and sends the ESSTAT X'0C' to the control device 2, which sends the asynchronous status X'04' to the host channel. The host channel responds the X'04' to send its response to the control device 2 and disconnects the control device 2. The control device 2 sends ASCOND, i.e. the host channel response, to the control device 3. It is assumed that the response is ACCEPT. Thus, at this time the control device 3 accepts the ending status X'0C' received in the ES. The WRITE operation is thereby completed.

The reasons for stacking the X'0C' are as follows. At the ES, the data has been stored in the control unit 4 or the I/O device. If the X'0C' is accepted by the control device 3 during the ES, the control unit 4 considers as that the data transfer in the WRITE operation has completed without DISCONNECT, RESET, CHAINNING etc. It for example RESET, is sent by the host channel to reset the operation at the time it is received, and to clear the stored data. If the host channel sends the response RESET to the control unit 4 after the X'0C' had been accepted during the ES, the data stored in the control unit 4 or the I/O device can not be cleared, thus an integration of operations is lost.

In the type 2 operation, the control unit 4 sends the status X'0C' (Channel end and Device end) when the control unit 4 has received the data from the remote channel control device 3 into its data buffer memory. The reasons for generating the X'0C' are that the data has been stored in the data buffer memory of the control unit 4 and it is deemed that the I/O device 12 has processed the data.

The host channel connects the local channel control device 2 from the ISS to the ES, disconnects it until the CUIS, and connects it during the CUIS, and can perform other jobs during the disconnected period. The remote channel control device 3 is also disconnected, as shown in the Fig. 7, and can perform jobs of the other control unit during the disconnected period.

Fig. 8 shows the TYPE 2 READ operation wherein the data is sent from the I/O device 12 and the control unit 4 with the data buffer memory to the host unit 1.

During the ISS, the host channel sends the control device 2 the READ command and the address X'62' of the control unit 4 with the data buffer memory. In the same manner as described in the TYPE 1 operations the READ command and the address X'62' are supplied to the initial status table 21 and the type information table 22 of the local channel control device 2 to select the initial status X'4A' and the type information or TYPE 2, respectively. The control device 2 sends the X'4A' to the host channel during the ISS, and sends the READ command, the address X'62' and the type information TYPE 2 to the remote channel control device 3 as the message ISSINF. The host channel responds the X'4A' to disconnect the control device 2. It is noted that the X'4A' makes the host channel to perform the command retry when the host channel receives the X'04' from the local channel control device 2. The control device 3 sends the READ command and the address X'62' to the control unit 4, which sends back the initial status X'00' to the control device 3 during the ISS. The control device 3 then sends the X'00' to the control device 2.

The data is read from the I/O device 12 to the control unit 4 and sent to the remote channel control device 3 during the DTS. When the control device 3 has received the data, it sends the message DTSCMP to the local channel control device 2. The control unit 4 sends the ending status X'0C' to the control device 3 during ES, which stacks the status X'0C' and sends the X'0C' to the control device 2. After the DTSCMP, the data is sent from the control device 3 to the control device 2. The control device 2 sends the asynchronous status X'04' to the host channel during CUIS, which responds the X'04' to start the command retry to resend the READ command and the address X'62' to the local channel control device 2, which sends back the X'00' to the host channel in the ISS. The data is sent from the control device 2 to the host channel in DTS. The control device 2 sends the ending status X'0C' to the host channel during the ES. The host channel sends a signal on the tag line representing its response and disconnects the control device 2. The response, i.e. ESCOND, is sent from the control device 2 to the control device 3. If the response is ACCEPT, the control device 3 accepts at this time the ending status X'0C' received in the ES. If the response is RESET, the data is cleared. The READ operation is thereby completed.

The host channel connects the control device 2 during the ISS, disconnects until the CUIS, and connects until the ES; and the remote channel control device 3 connects and disconnects the control unit 4, as shown in the Fig. 8. During the disconnected period, the host channel can perform other jobs, and the remote channel control device 3 can perform jobs of other control unit.

In the above TYPE 2 operation, the control unit 4 sends the status X'0C' to the remote channel control device 3 when the data in the data buffer memory of the control unit 4 has been sent to the remote channel control device 3.

The Fig. 9 shows the TYPE 3 operation wherein a command, such as CONTROL, without the data transfer is processed. The CONTROL command is used to directly control the condition of the I/O device.

The host channel sends the CONTROL command and the address X'62' of the control unit 4, for example, to which the I/O device is connected, to the local channel control device 2 during the ISS. The CONTROL command and the address X'62' are supplied to the initial status table 21 and the type information table 22 to select the initial status X'4A' and the type information TYPE 3. The initial status X'4A' is sent to the host channel during the ISS, which responds the X'4A' to disconnect the control device 2. The control device 2 sends the CONTROL command, the address X'62' and the type information TYPE 3 to the control device 3, which sends the CONTROL command and the address X'62' to the control unit 4 during ISS, which sends the initial status X'08' to the control device 3. The control device 3 stacks the X'08', and sends the X'08' to the control device 2. The control device 2 sends the asynchronous status X'04' to the host channel, which responds the X'04' to perform the command retry by sending again the CONTROL command and the address X'62' to the control device 2; sends its response to the X'08' to the control device 2; and disconnects the control device 2. The control device 2 sends the host unit response ESCOND to the control device 3. It is assumed the host response is ACCEPT. The remote channel control device 3 accepts, at this time, the X'08' stacked during ISS. The control unit 4 sends the asynchronous status X'04' to the control device 3, which stacks the X'04', and sends the ASYNDE X'04' to the control device 2, which sends the X'04' to the host channel. The host channel responds the X'04' to send its response, e.g. ACCEPT, to the control device 2, and disconnects the local channel control device 2. The control device 2 sends the host unit response ASCOND to the control device 3, which, at this time, accepts the X'04' stacked during the CUIS. The operation of the CONTROL command is thereby completed.

The host channel connects and disconnects the local channel control device 2, and the remote channel control device 3 connects and disconnects the control unit 4, as shown in the Fig. 9. The host channel and the remote channel control device 3 can perform other jobs during the disconnected period, respectively.

As a modification of the embodiment, additional plural remote channel control devices can be connected to the remote channel control device 3 in a multi-drop connection.

## Claims

**1.** Data processing system comprising:

a host unit generating a command and address:

a local channel control means connected to said host unit for receiving said command and said address, to generate an initial status depending upon said command and said address and to send said initial status to said host unit;

a remote channel control means connected to said local channel control means for receiving said command and said address; and

a control unit connected to said remote channel control means for receiving said command and said address to control an I/O device;

said host unit responding said initial status to control a connection and a disconnection of said local channel control means.

**2.** A data processing system as claimed in Claim 1 wherein said local channel control means discriminates a type of operation for processing said command, in accordance with said command and said address and sends a type information representing said type of operation to said remote channel control means, and said remote channel control means controls the operations for said command in accordance with said type information.

**3.** A data processing system as claimed in Claim 1 or Claim 2 wherein said local channel control means includes an initial status table storing initial statuses which are accessed by said command and said address, and a type information table storing type information which are accessed by said command and said address.

**4.** A data processing system as claimed in any one of the preceding claims wherein said control unit is a control unit without data buffer memory or a control unit with data buffer memory.

**5.** A data processing system as claimed in any one of the preceding claims wherein said host unit and said local channel control means are connected by parallel data transmission line, said local channel control means and said remote channel control means are connected by serial data transmission line, and said remote channel control means and said control unit are connected by parallel data transmission line.

**6.** Data processing system as claimed in any preceding claim wherein:

said host unit generates a WRITE command and address;

said local channel control means is connected to said host unit for receiving said WRITE command, said address and data;

said remote channel control means is connected to said local channel control means for receiving said WRITE command, said address and said data; and

said control unit is connected to said remote channel control means for receiving said WRITE command, said address and said data and for sending an initial status representing an acceptance of said WRITE command to said remote channel control means;

said remote channel control means sending said WRITE command to said control unit after receiving said data from said local channel control means, and sending said initial status of said control unit to said local channel control means;

said local channel control means responding to said initial status to send a channel end status to said host unit; and said host unit responding said channel end status to disconnect said local channel control means until receiving a device end status from said local channel control means.

**7.** A data processing system as claimed in any preceding claim wherein:

said host unit generates a READ command and address;

said local channel control means is connected to said host unit for receiving said READ command and said address;

said remote channel control means is connected to said local channel control means for receiving said READ command and said address; and

said control means is connected to said remote channel control means for receiving said READ command and said address, and connected to I/O device for receiving data from said I/O device;

said local channel control means responding said READ command and said address to send a first status representing a command retry to said host unit, receiving said data from said control unit through said remote channel control means, and sending a second status representing the receive of said data to said host unit;

said host unit responding said first status to disconnect said local channel control means, and responding said second status to connect said local channel control means to receive said data from said local channel control means.

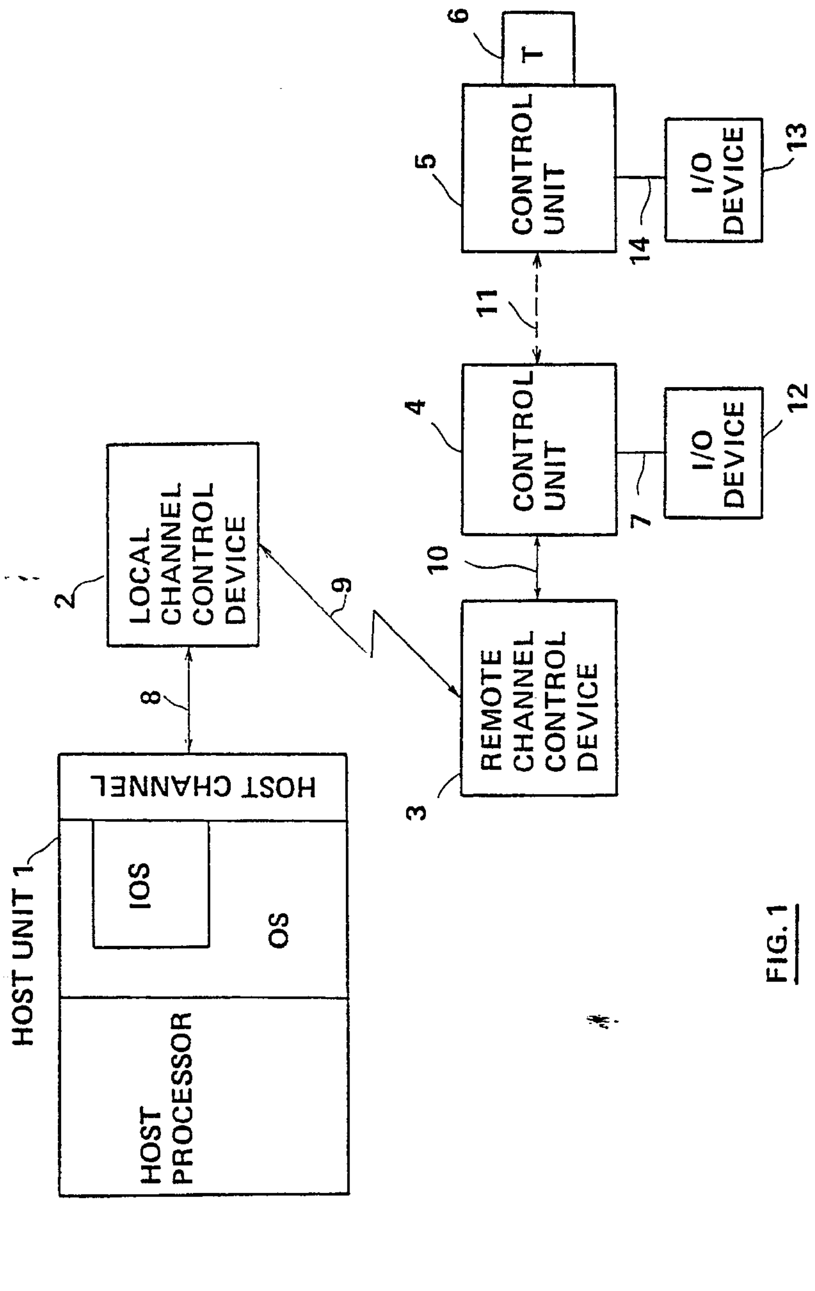
HOST UNIT 1
HOST PROCESSOR
IOS
OS
HOST CHANNEL
8
2
LOCAL CHANNEL CONTROL DEVICE
9
3
REMOTE CHANNEL CONTROL DEVICE
10
4
CONTROL UNIT
7
I/O DEVICE
12
11
5
CONTROL UNIT
14
I/O DEVICE
13
6
T

FIG. 1

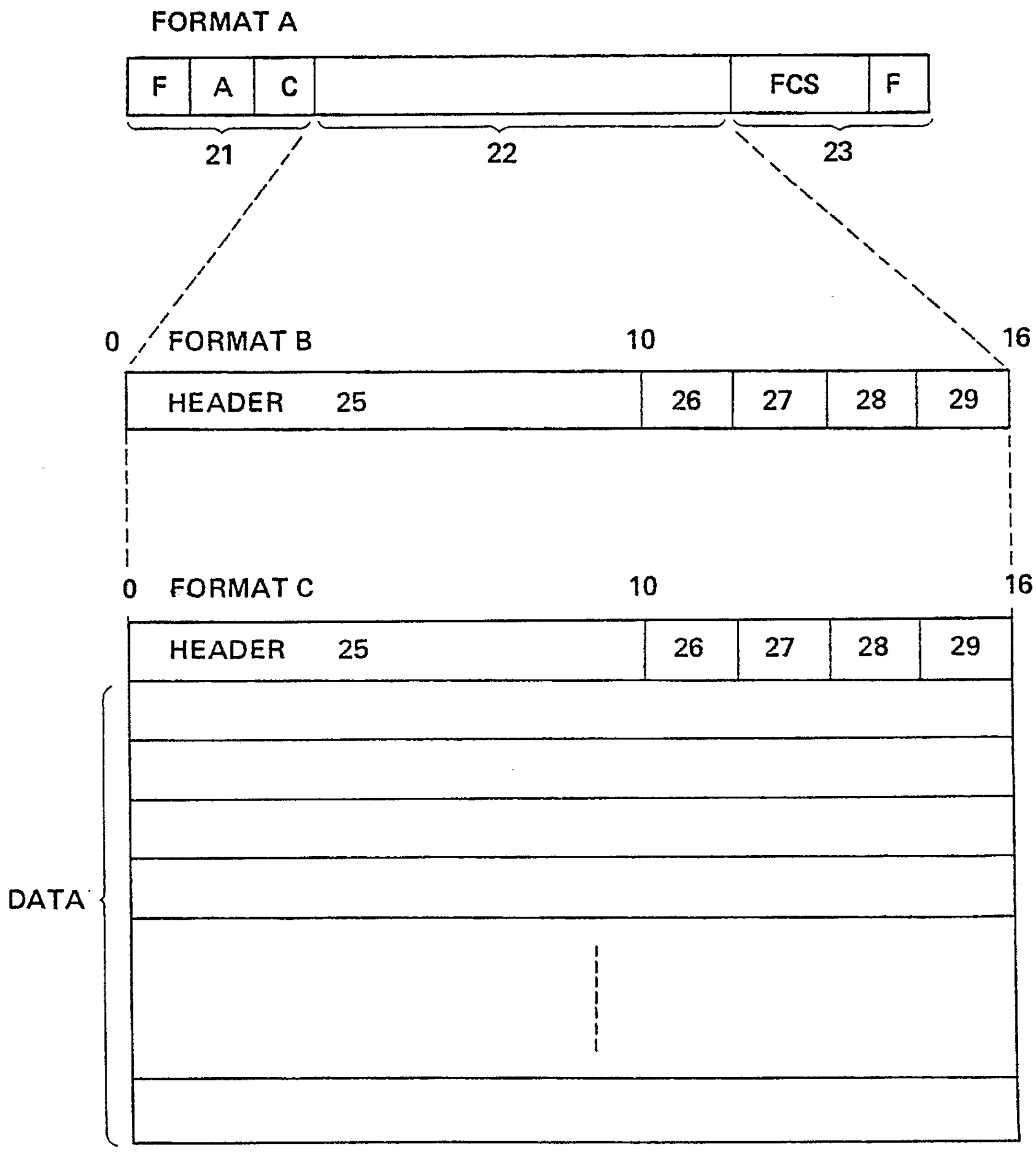
FORMAT A
F
A
C
FCS
F
21
22
23
0
FORMAT B
10
16
HEADER
25
26
27
28
29
0
FORMAT C
10
16
HEADER
25
26
27
28
29
DATA

FIG. 2

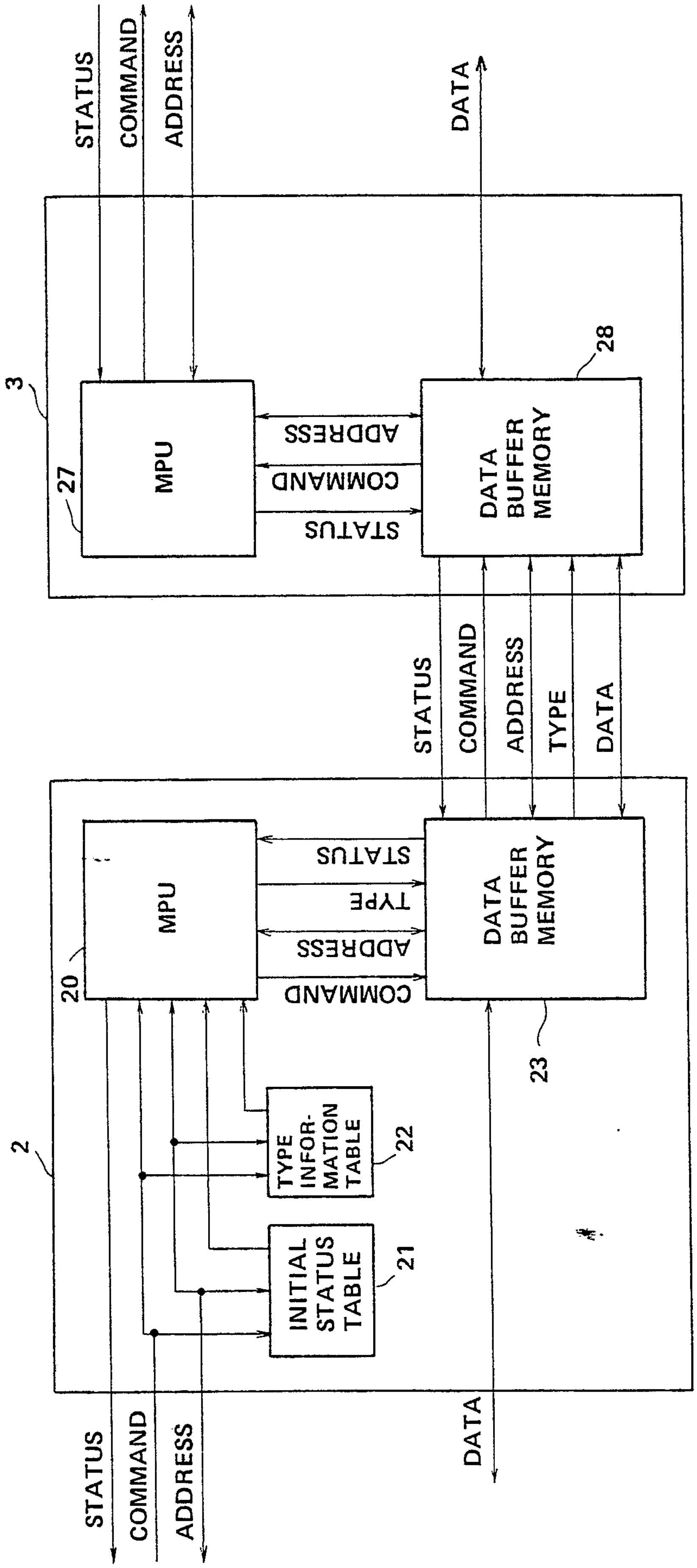
STATUS
COMMAND
ADDRESS
DATA
3
27
MPU
ADDRESS
COMMAND
STATUS
DATA BUFFER MEMORY
28
STATUS
COMMAND
ADDRESS
TYPE
DATA
2
20
MPU
STATUS
TYPE
ADDRESS
COMMAND
DATA BUFFER MEMORY
23
TYPE INFOR-MATION TABLE
22
INITIAL STATUS TABLE
21
STATUS
COMMAND
ADDRESS
DATA

FIG. 3

INITIAL STATUS TABLE 21

COMMAND

| | | READ | WRITE | CONTROL | |
|---|---|---|---|---|---|
| | | | | | |
| ADDRESS X '61' (CONTROL UNIT 5) | | X '4A' | X '00' | X '41' | |
| ADDRESS X '62' (CONTROL UNIT 4) | | X '4A' | X '00' | X '4A' | |
| | | | | | |

ADDRESS

FIG. 4A

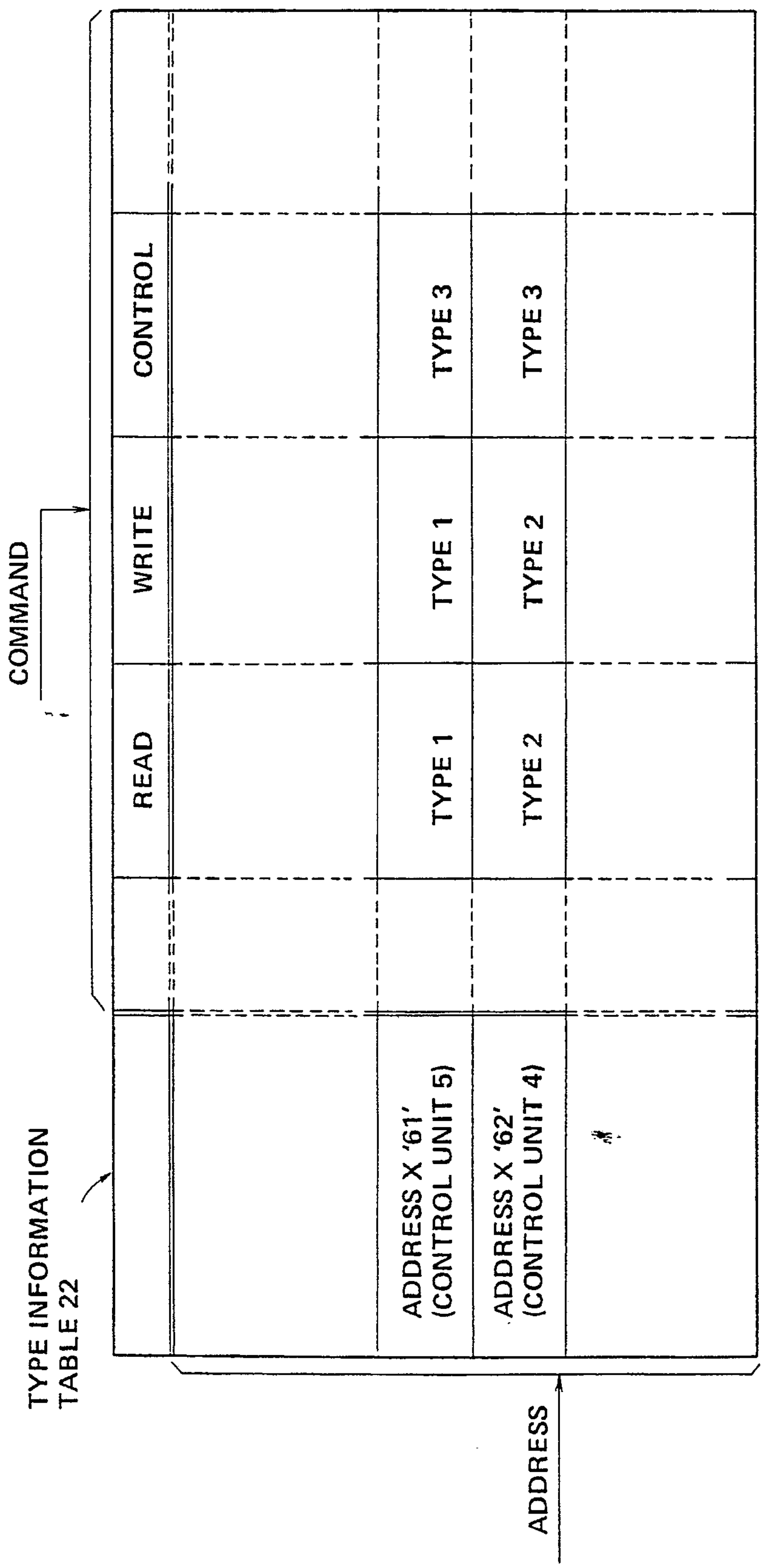

TYPE INFORMATION TABLE 22
COMMAND
ADDRESS
READ
WRITE
CONTROL
ADDRESS X '61' (CONTROL UNIT 5)
TYPE 1
TYPE 1
TYPE 3
ADDRESS X '62' (CONTROL UNIT 4)
TYPE 2
TYPE 2
TYPE 3


FIG. 4B

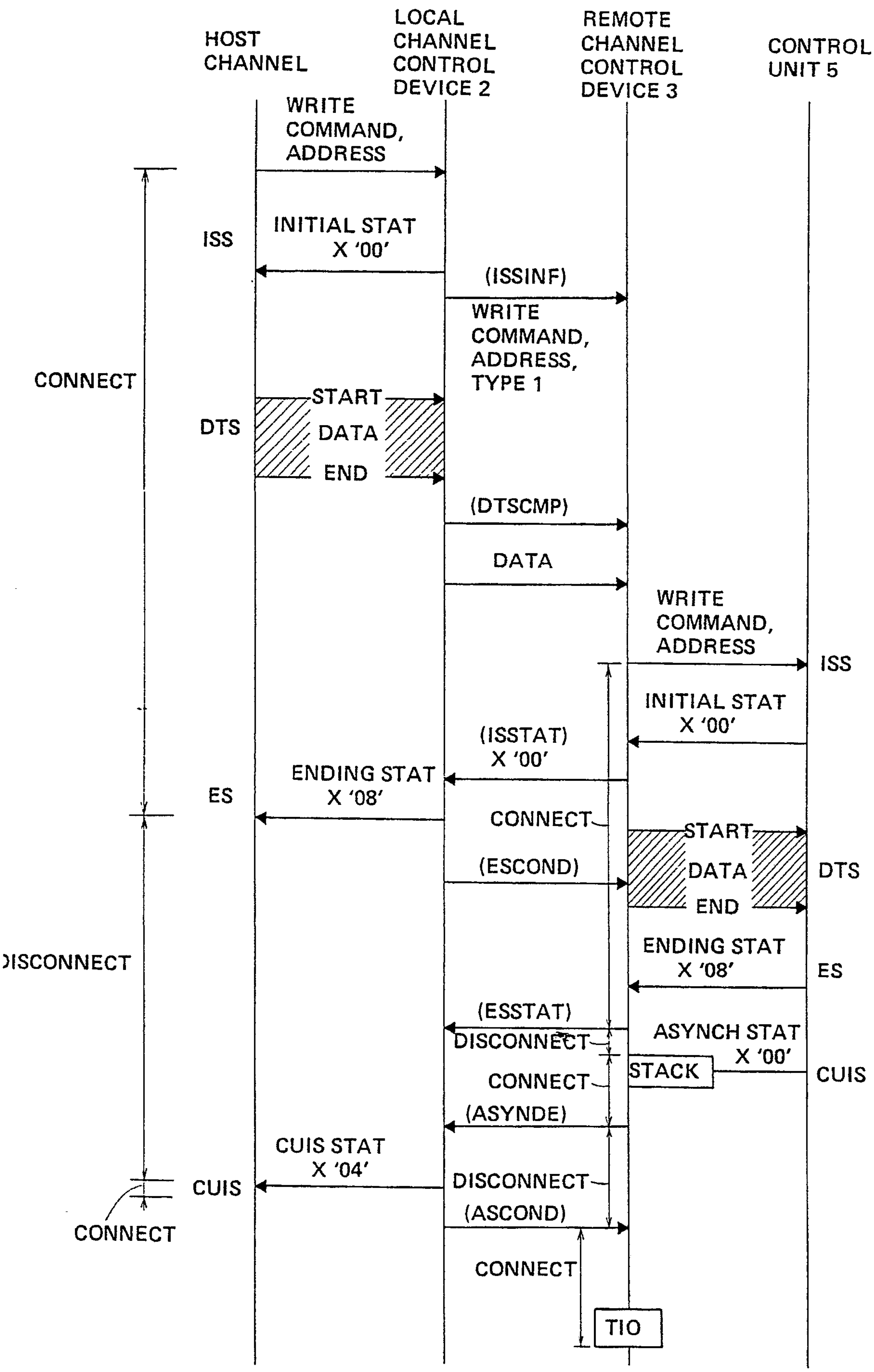


FIG. 5 TYPE 1 WRITE OPERATION

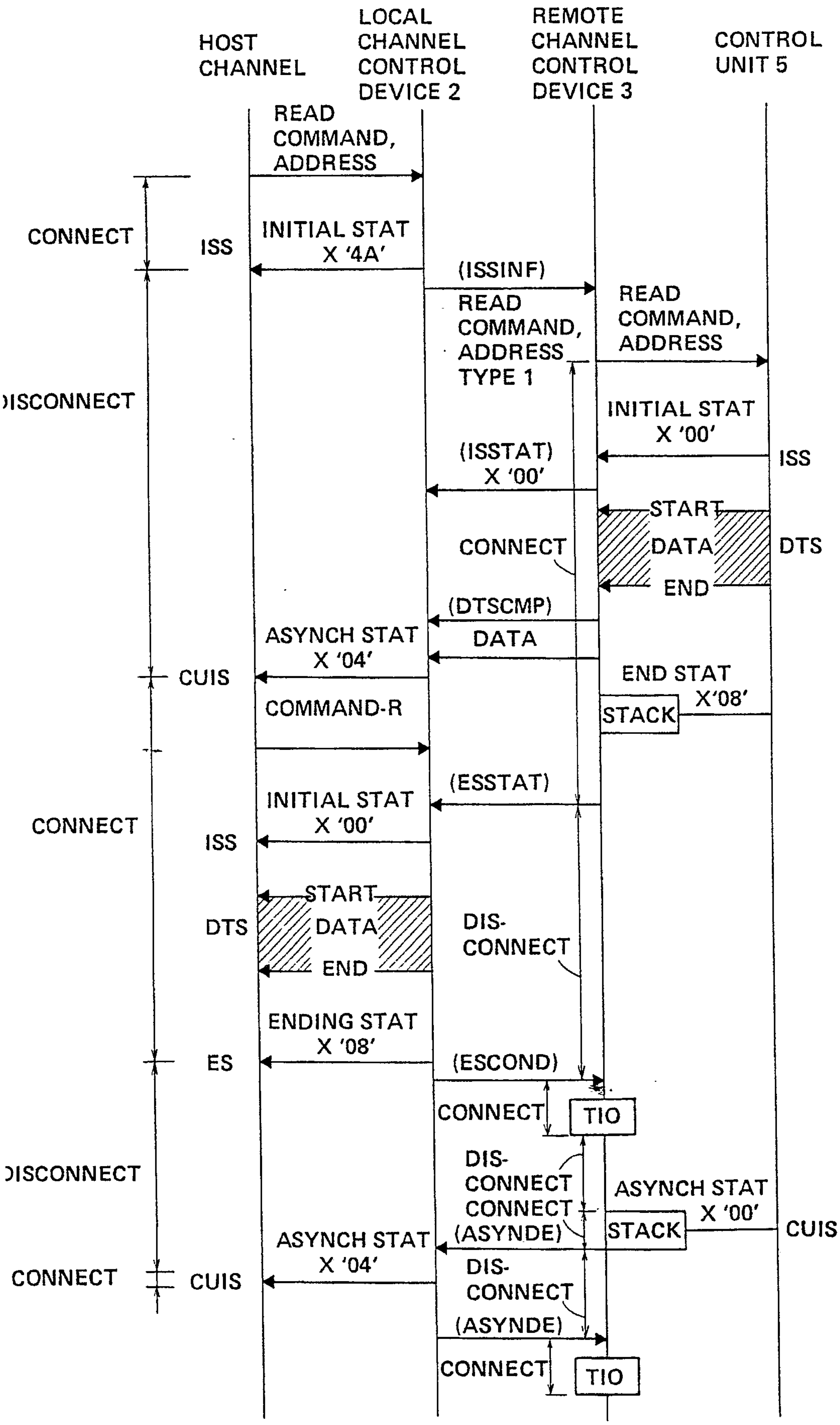


FIG. 6 TYPE 1 READ OPERATION

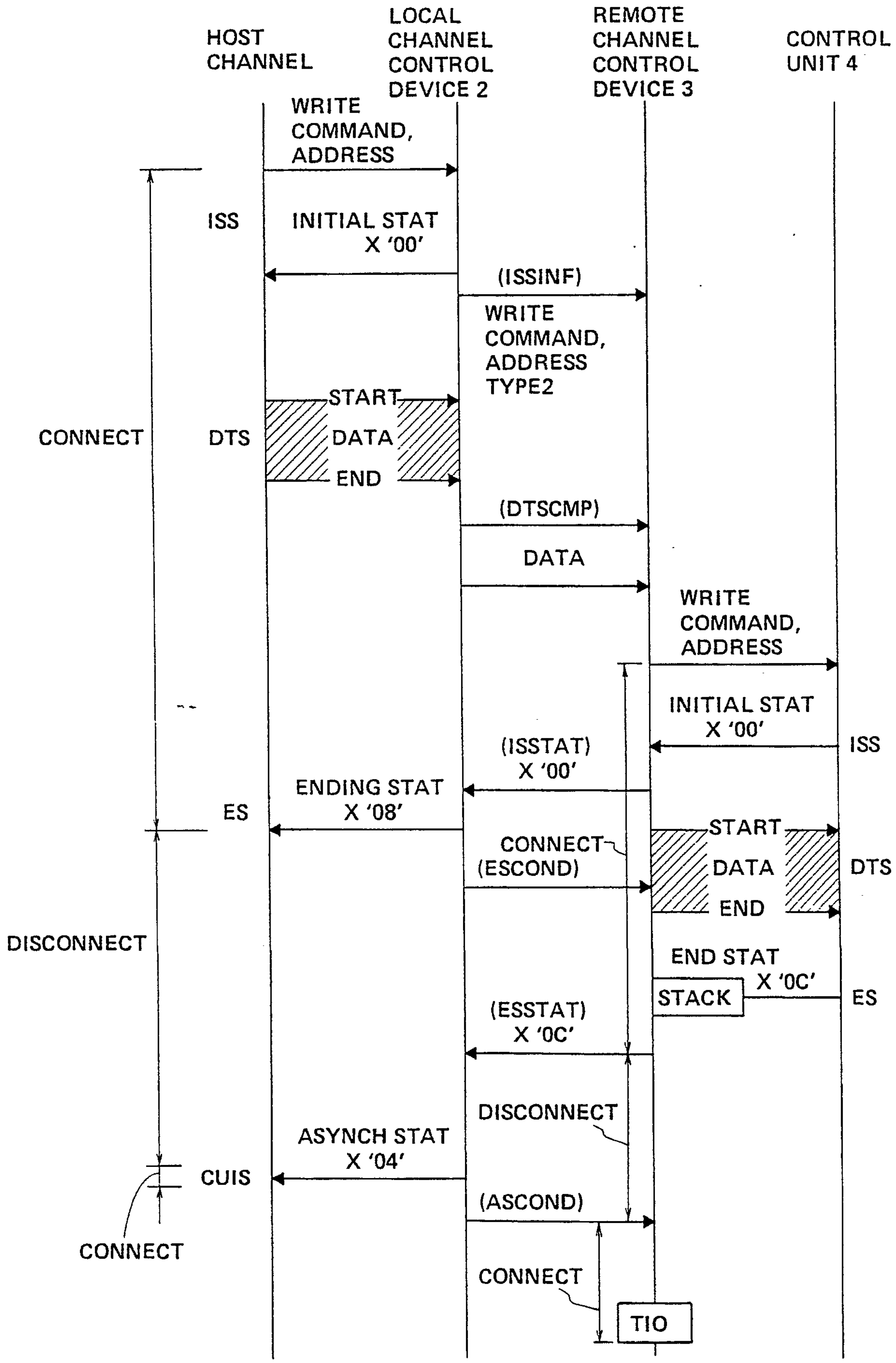


FIG. 7 TYPE 2 WRITE OPERATION

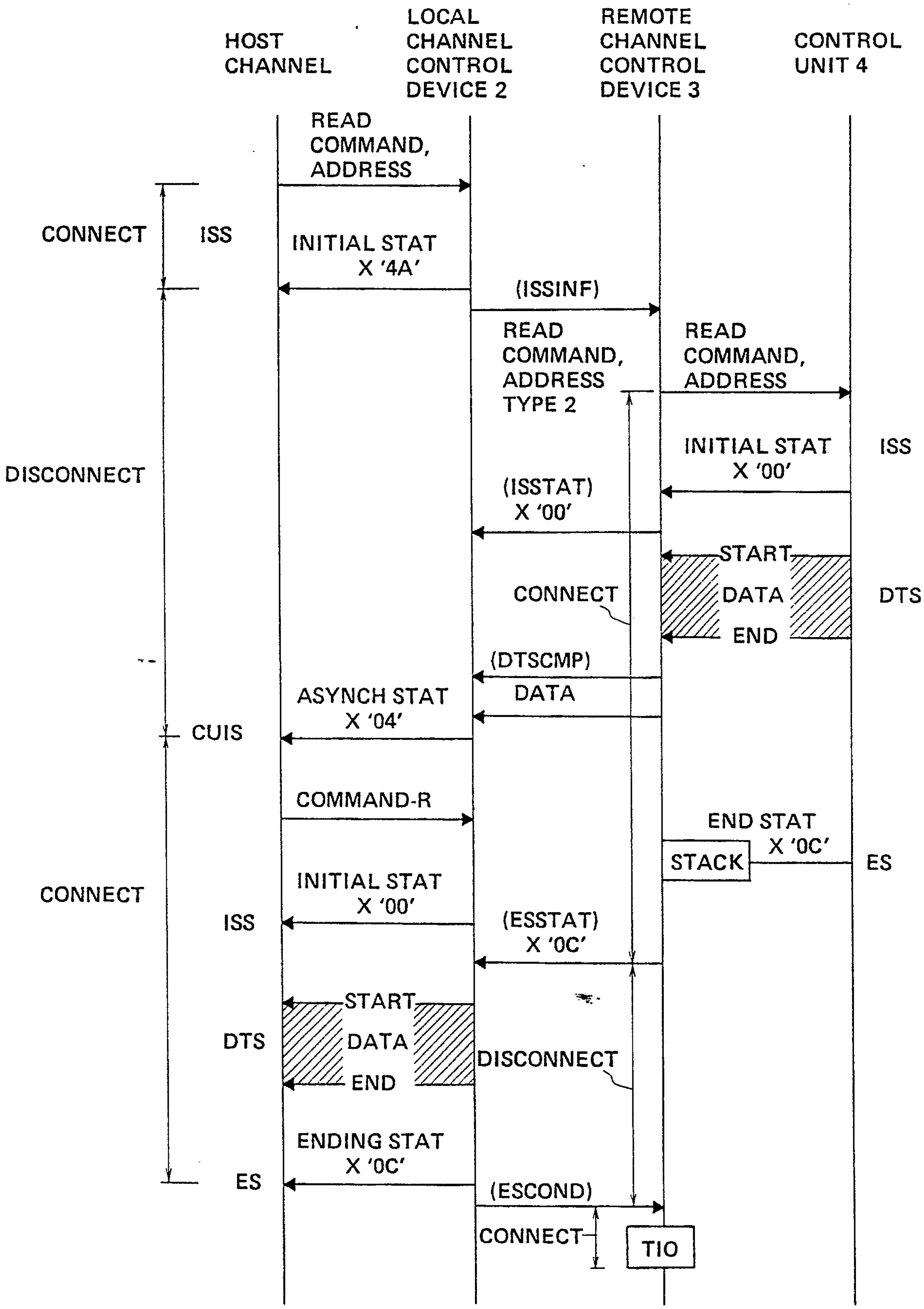


TYPE 2 READ OPERATION

FIG. 8

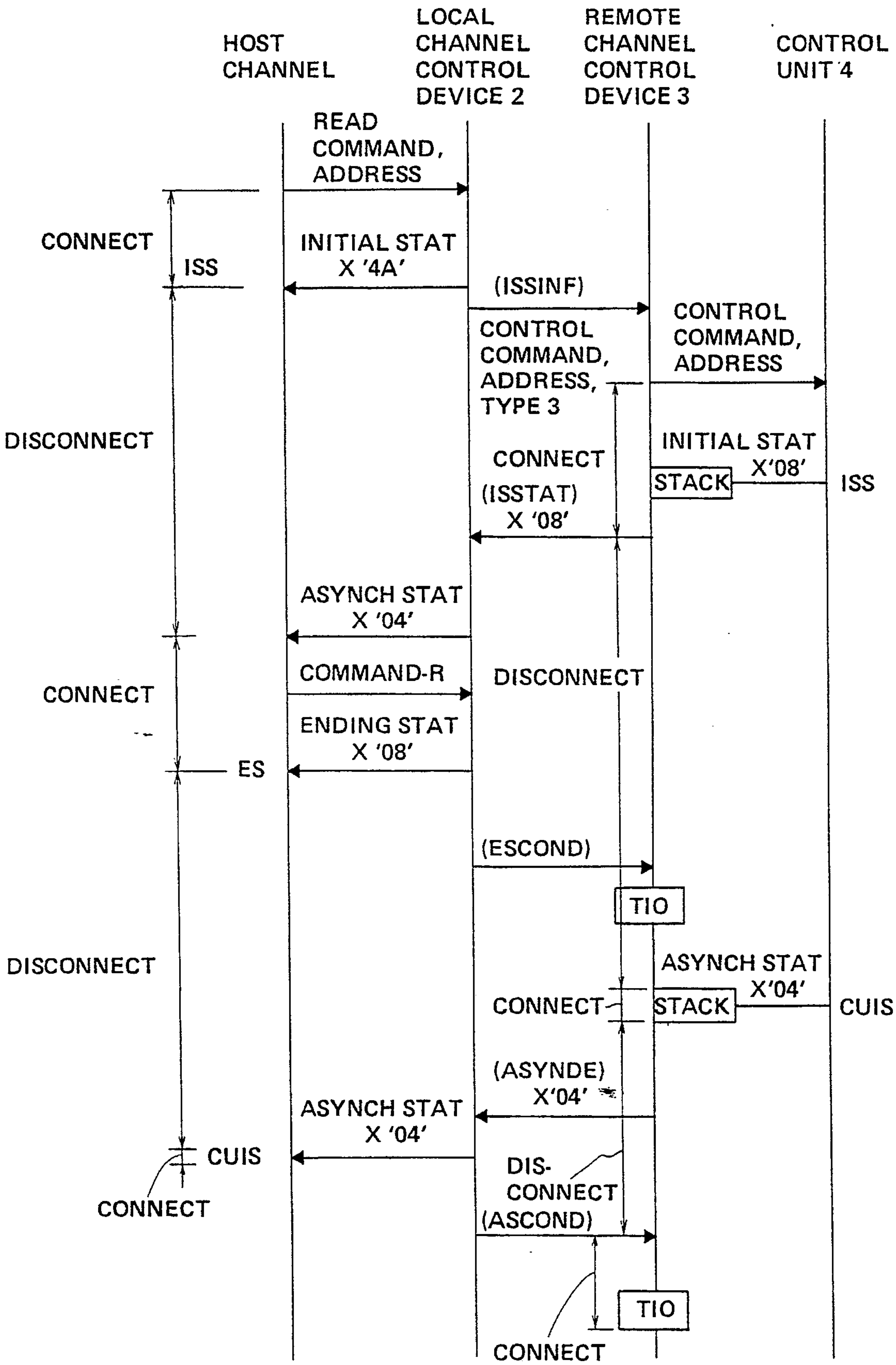


TYPE 3 OPERATION

FIG. 9

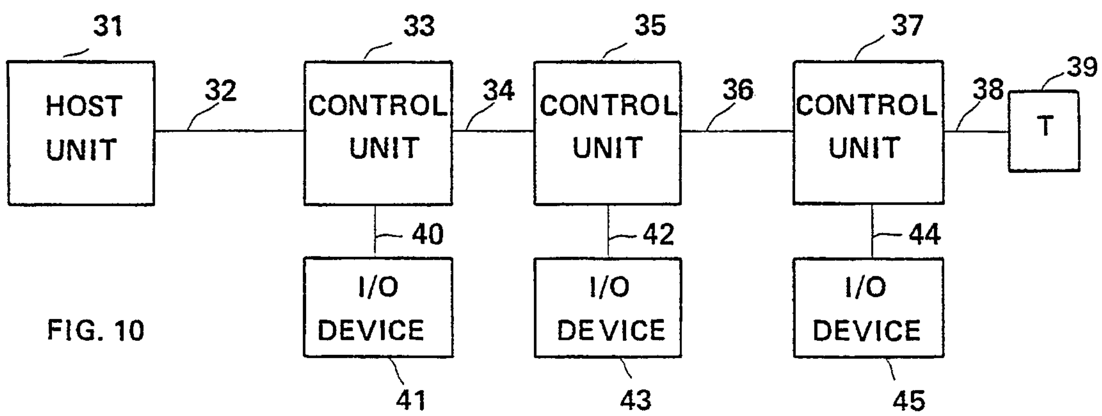


FIG. 10

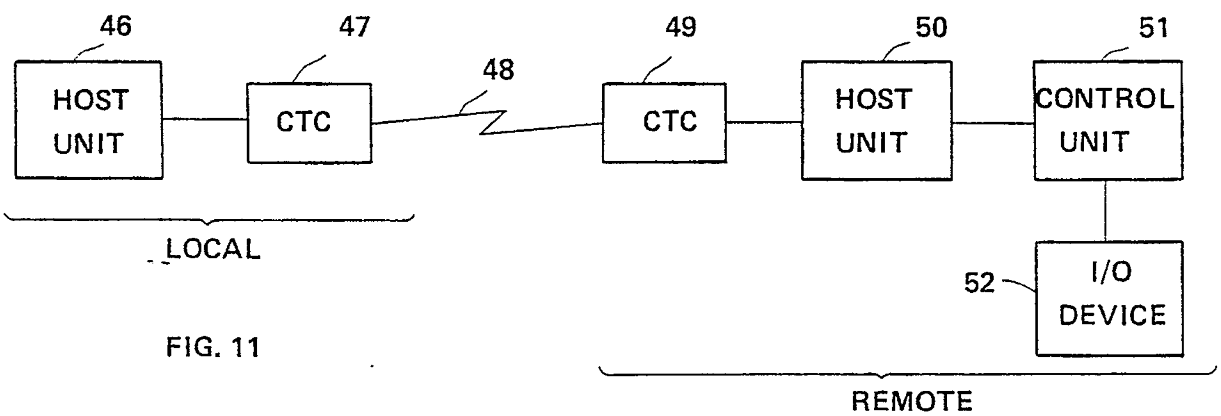


FIG. 11

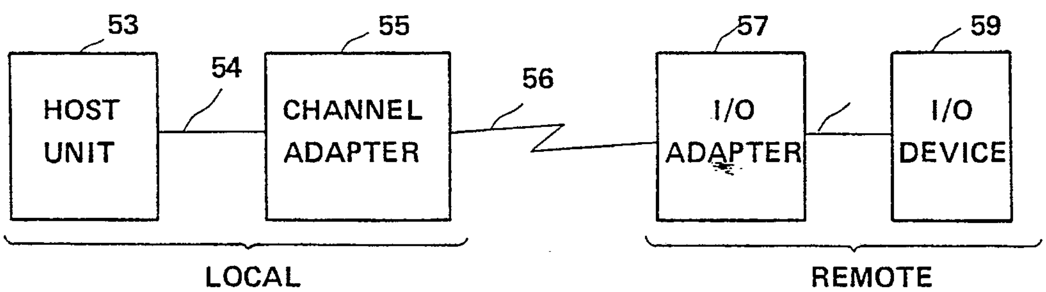


FIG. 12